# EUROPEAN PATENT SPECIFICATION

(11) **EP 3 004 632 B1**
(45) Date of publication and mention of the grant of the patent: **22.08.2018**
(21) Application number: 13885902.0
(22) Date of filing: 30.05.2013
(51) Int. Cl.: F03B 17/06, F03B 13/26, B63G 8/00, B64C 39/02, F03D 9/00, F03B 13/10, F03B 13/22, F03D 5/00, F03D 13/20, F03D 9/25

(54) **SUBMERSIBLE POWER PLANT HAVING MULTIPLE TURBINES**
UNTERWASSERKRAFTWERK MIT MEHREREN TURBINEN
CENTRALE ÉLECTRIQUE SUBMERSIBLE AYANT PLUSIEURS TURBINES

(43) Date of publication of application: 13.04.2016
(73) Proprietor: Minesto AB, 426 71 Västra Frölunda (SE)
(72) Inventor: PETTERSSON, Patrik, S-424 36 Angered (SE)
(74) Representative: Zacco Sweden AB
(86) International application number: PCT/SE2013/050625
(87) International publication number: WO 2014/193281

(56) References cited:
- EP-A1- 1 816 345
- US-A1- 2010 013 226
- US-A1- 2012 104 763
- US-A1- 2013 106 105

## Description

### TECHNICAL FIELD

The invention relates to a submersible power plant for generating electrical power. The power plant comprises a structure and a vehicle comprising at least one wing. The vehicle is arranged to be secured to the structure by means of at least one tether. The vehicle is arranged to move in a predetermined trajectory by means of a fluid stream passing the wing. The power plant comprises at least a first turbine, a second turbine and a third turbine being arranged to be attached to the wing of the vehicle. The first turbine is connected to a first generator, the second turbine is connected to a second generator and the third turbine is connected to a third generator.

### BACKGROUND ART

Submersible plants for generating electrical power are known in the art, see for instance EP 1816345. In EPO 1816345 the submersible plant is attached to a structure and moves along a trajectory and is powered by tidal currents. In EP 1816345 the submersible plant is steered along the predetermined trajectory by use of a control system which controls the submersible power plant using control surfaces.

Control surfaces requires a number of moving parts and associated control and power systems which are susceptible to wear and may therefore require frequent servicing. This increases the cost of servicing the submersible power plant as well as reduces the time the power plant can generate power.

It is therefore desirable to provide an improved submersible power plant.

### SUMMARY OF THE INVENTION

One object of the present invention is to provide an inventive submersible power plant where the previously mentioned problems are partly avoided. This object is achieved by the features of the characterising portion of claim 1. Another object of the present invention is to provide a method for steering a submersible power plant comprising a flying wing. This object is achieved by the features of the characterising portion of claim 11.

The invention relates to a submersible power plant for generating electrical power. The power plant comprises a structure and a vehicle comprising at least one wing. The vehicle is arranged to be secured to the structure by means of at least one tether. The vehicle is arranged to move in a predetermined trajectory by means of a fluid stream passing the wing. The power plant comprises at least a first turbine, a second turbine and a third turbine being arranged to be attached to the wing of the vehicle. The first turbine is connected to a first generator, the second turbine is connected to a second generator, and the third turbine is connected to a third generator. At least one of the first turbine, the second turbine and the third turbine is attached to the vehicle on a top surface of the wing, and at least one of the first turbine, the second turbine and the third turbine is attached to a bottom surface of the wing. Said first generator, second generator and third generator are arranged to be able to produce different fluid dynamics pressures exerted on the respective first, second and third turbines by means of torque control. An advantage of the invention is that by using torque control, it is possible to apply different counter-torques to the different turbines, i.e. to the first turbine, the second turbine and the third turbine, so that they may rotate at different rotation speeds. The turbines are thus torque-controlled. The torque-control of the generators/motors, and subsequently, the turbines, makes it possible to induce a controllable drag force on the wing. Since the turbines are located at different distances from the centre of the wing, their combined drag is directional in both yaw and pitch. With intelligent control these turbines can affect the movement of the wing and so partially or completely replace control surfaces. An intelligent control system managing the torque of the turbines acts on information regarding the orientation and location of the wing. The torque-control of the generators/motors can be created by servo drivers with break functionality commonly available in industry.

Different counter-torques applied to the respective first, second and third turbines causes a translational and/or rotational force to be exerted on the vehicle by means of that different fluid dynamic pressures are exerted on said first turbine, the second turbine and the third turbine by the fluid, causing the vehicle to pitch and/or yaw. Different pressure can be exerted on one or more of the turbines. This effect removes the need for additional control surfaces such as a rudder. Removing a moving part such as a rudder together with servos controlling the rudder increases the ruggedness of the power plant. A submersible power plant may alternatively use front and rear struts to give the tether an attachment point far below the wing. This reduces pitch instability and the influence of hydrostatic unbalance. This is a system involving several parts and a number of couplings and is therefore relatively complex to design and manufacture and which may increase the cost of the submersible plant.

In the present invention struts are no longer necessary which further reduces the complexity of the power plant. The present invention also makes it possible to move the tether coupling into the wing or into a coupling arrangement mounted close to the wing.

Further, by using at least three turbines, each turbine can be made smaller than when only one turbine is used. This leads to that controlling each turbine and generator combination is made easier due to the reduced power of each turbine and generator. This means that the power control electronics are easier to design. Having smaller turbines also simplifies cooling of the generators and their power control electronics and may lead to reduced total weight and a more distributed mechanical load, facilitating the structural design.

A further advantage of being able to apply different counter-torques to different turbines in order to control pitch and/or yaw is that it is possible to dynamically control pitch and/or yaw depending on the position of the vehicle on its predetermined trajectory. This makes it possible to optimize the power output of each generator as well as the steering of the vehicle.

The at least first, second and third turbines may have a turbine function for generating electrical power and a thruster function for propelling the vehicle forward or backward. The thruster function is produced by that at least one of the first, second and third generators are run by that power is applied to the generator making it run either forward or in reverse.

An advantage with being able to use the turbines as motors, for example by running the respective generators in a forward direction is that it is easier to start the power plant's motion along the predetermined trajectory whereupon the function is switched to generating electrical power. It is also possible to run the vehicle to the surface when maintenance is required. An advantage with this is that the vehicle could be run from the surface down to operating depth after installation or maintenance. Another advantage with the thruster function is that the need for additional systems for rescue in case of malfunction, reaching the surface for service or buoyancy control of the submersible power plant is reduced. This can now be achieved by using the turbines as engines. This operation works with three or more turbines operational.

The power plant may comprise an odd number of turbines greater than three, where one more turbine is attached to the vehicle to a top surface of the wing than is attached to the vehicle on a bottom surface of the vehicle. The power plant may comprise an odd number of turbines greater than three, where one less turbine is attached to the vehicle to a top surface of the wing than is attached to the vehicle on a bottom surface of the vehicle. The power plant may comprise at least one turbine which has a larger rotor diameter than the remaining turbines.

The power plant may comprise an even number of turbines greater than two, where an equal number of turbines are attached to the vehicle to a top surface of the wing and to the vehicle on a bottom surface of the wing. The power plant may comprise an even number of turbines greater than two, where more turbines are attached to the vehicle to a top surface of the wing than to the vehicle on a bottom surface of the wing or where more turbines are attached to the vehicle to a bottom surface of the wing than to the vehicle on a top surface of the vehicle.

By having more than three turbines and generators, the power generation is made more redundant in that power generation and the thruster function may continue even though one turbine and generator malfunctions.

When one turbine is not attached to the bottom surface of the wing at the centre of mass of the wing, the tether is attached to the vehicle by being attached to a coupling in the wing of the vehicle. By not having any struts to which the tether is attached it is now possible to attach the tether directly to the wing of the vehicle. This makes installation and maintenance of the power plant easier as it is no longer required to lift the vehicle to a height above water which is equal to the extension of the struts below the wing. The extension may be in the order of the width of the wing. The present invention allows for that the vehicle is lifted just a short distance above the water surface such that the coupling between the vehicle and the tether is near or at the water surface. It could also be possible to lift the vehicle such that it rests on the water surface and that a diver can decouple the tether from the wing of the vehicle.

When one turbine is attached to the bottom surface of the wing at the centre of mass of the wing, the tether may be attached to the vehicle by being attached to a coupling in a nacelle to said turbine is connected. This allows for a different configuration of the turbines while still being able to take advantage of not having struts.

The power plant may comprise at least one fixed passive control surface. In order for the vehicle to properly straighten out after turning and not drifting sideways or in any other way misalign in comparison to the direction of travel of the vehicle, the vehicle of the power plant may have a passive control surface. The passive control surface may be in the shape of a fin extending on either the top or bottom side of the wing or on both sides. The passive control surface may also be part of a fastening component which attaches at least one of the turbine and generator to the wing. The fastening component may be raised from the wing and/or extended forward or rearward such that it takes the proper shape for it to function as a passive control surface. The passive control surface can be the combination of a fin and fastening components which attaches the turbine and generator to the wing.

The invention also relates to a method for steering a submersible power plant. The submersible power plant comprises a structure and a vehicle comprising at least one wing. The vehicle is arranged to be secured to the structure by means of at least one tether. The vehicle is arranged to move in a predetermined trajectory by means of a fluid stream passing the wing. The power plant comprises at least a first turbine, a second turbine and a third turbine being arranged to be attached to the wing of the vehicle. At least one of the first, second and third turbine is attached to the vehicle on a top surface of the wing. The first turbine is connected to a first generator, the second turbine is connected to a second generator and the third turbine is connected to a third generator. Said first generator, second generator and third generator are arranged to be able to produce different counter-torques to the respective first, second and third turbines. The method comprises:
- applying a first counter-torque by the first generator to the first turbine to set a first rotation speed to the first turbine,
- applying a second counter-torque by the second generator to the second turbine to set a second rotation speed to the second turbine,
- applying a third counter-torque by the third generator to the third turbine to set a third rotation speed to the third turbine.

An advantage with the method of the invention is the ability to extract different amounts of power by applying different counter-torques to the different turbines, i.e. the first turbine, the second turbine and the third turbine, such that they may rotate at different rotation speeds. This causes a translational and/or rotational force to be exerted on the vehicle by means of that different fluid dynamic pressures are exerted on said first turbine, the second turbine and the third turbine by the fluid, causing the vehicle to pitch and/or yaw. This removes the need for additional control surfaces such as a rudder.

Generally, by applying a greater counter-torque to one turbine this turbine will shift the axis around which the vehicle will turn. For instance, to yaw port, a turbine on the port side of the centre of mass of the wing will have a greater power exerted from it than a turbine on a starboard side of the centre of mass of the wing.

The method may also comprise:
- controlling the pitch of the vehicle by applying a counter-torque to the one or more turbines connected to the vehicle on a top surface of the wing by their corresponding generators, the total of which is different from the total counter-torque applied to the one or more turbines connected to the vehicle on a bottom surface of the wing by their corresponding generators.

The method may also comprise:
- controlling the yaw of the vehicle by applying a counter-torque to the one or more turbines connected to the vehicle on a first side of the centre of mass of the wing by their corresponding generators, the total of which is different from the total counter-torque applied to the one or more turbines connected to the vehicle on a second side of the centre of mass of the wing by their corresponding generators.

By adjusting the counter-torque of the turbines attached to the top surface of the wing and the bottom surface of the wing while at the same time adjusting the counter-torque of the turbines attached to a first side of the centre of mass of the wing and a second side of the centre of mass of the wing, it is possible to produce manoeuvres combining both pitch and yaw. The method can of course be applied to any number of turbines.

### BRIEF DESCRIPTION OF THE DRAWINGS

Figure 1 schematically illustrates a submersible plant according to the invention.
Figure 2 schematically illustrates a control system of a vehicle of a submersible power plant according to the invention.
Figure 3 schematically illustrates a vehicle of a submersible power plant according to the invention.
Figure 4a schematically illustrates a vehicle of a submersible power plant according to the invention.
Figure 4b schematically illustrates a vehicle of a submersible power plant according to the invention.
Figure 5 schematically illustrates a vehicle of a submersible power plant according to the invention.
Figure 6a schematically illustrates a vehicle of a submersible power plant according to the invention.
Figure 6b schematically illustrates a vehicle of a submersible power plant according to the invention.
Figure 7 schematically illustrates a vehicle of a submersible power plant according to the invention.
Figure 8 schematically illustrates a vehicle of a submersible power plant according to the invention.
Figure 9 schematically illustrates a vehicle of a submersible power plant according to the invention.
Figure 10 schematically illustrates a vehicle of a submersible power plant according to the invention.

### DETAILED DESCRIPTION

In the drawings, like features have the same reference numbers.

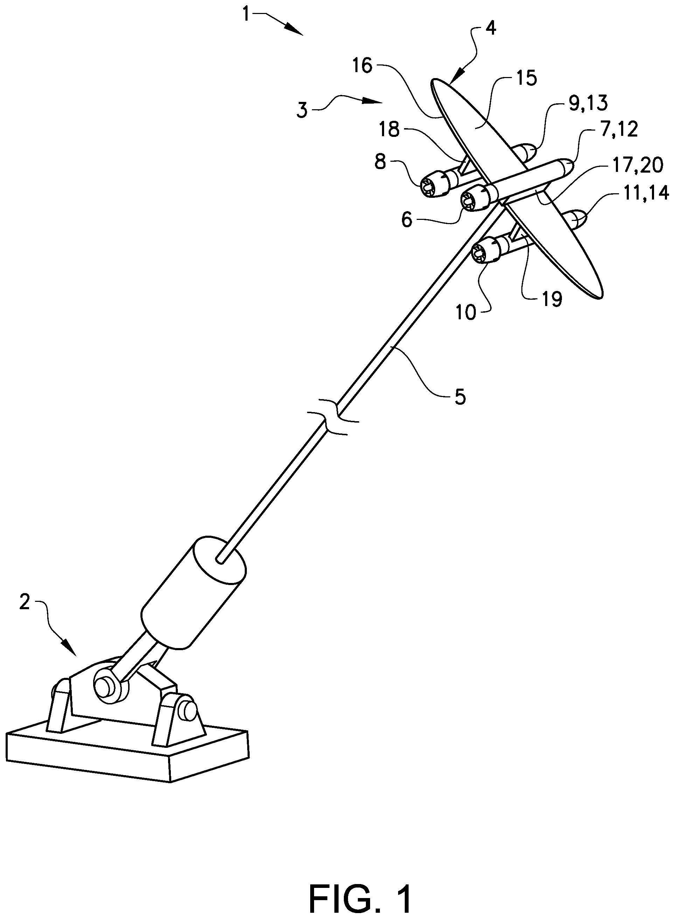

Figure 1 schematically illustrates a submersible power plant 1 according to the invention. The submersible power plant 1 comprises a structure 2 and a vehicle 3 comprising at least one wing 4. The vehicle 3 is secured to the structure 2, which is located on a surface at the bottom of a body of water, by means of at least one tether 5. The vehicle 3 is arranged to move in a predetermined trajectory by means of a fluid stream passing the wing 4. The tether 5 is arranged to transport power to or from the power plant 1. The submersible power plant 1 comprises at least a first turbine 6, connected to a first nacelle 7, a second turbine 8 connected to a second nacelle 9 and a third turbine 10 connected to a third nacelle 11. The first nacelle 7, second nacelle 9 and third nacelle 11 comprises a first generator 12, a second generator 13 and third generator 14 respectively where each generator 12, 13 14 is attached to its respective turbine 6, 8, 10. Each nacelle also comprises most of the electronics to monitor and control the respective generator and thereby the vehicle 3. In figure 1 the first turbine 6 is attached to the vehicle 3 on a top surface 15 of the wing 4 by means of the first nacelle 7. The second turbine 8 and the third turbine 10 are attached to the vehicle 3 to a bottom surface 16 of the wing 4 by means of the second nacelle 9 and third nacelle 11 respectively. Each nacelle 7, 9, 11 is attached to the wing by a respective first fastening component 17, second fastening component 18 and third fastening component 19. Although the turbine and nacelle are described as separate entities throughout the detailed description this is for illustrative purposes. It is of course possible for the turbine to be an integrated part of the nacelle.

Said first generator 12, second generator 13 and third generator 14 are arranged to be able to produce different counter-torques to the respective first turbine 6, second turbine 8 and third turbine 10 in order to steer the submersible plant in any desired direction.

The vehicle 3 further comprises a passive control surface 20. In figure 1 the passive control surface 20 comprises the first fastening component 17 of the first nacelle 7 extending in a lengthwise direction of the vehicle 3. Alternatively, one or more of the fastening components 17, 18, 19 may together act as the passive control surface 20. The passive control surface 20 may additionally or alternatively be in the shape of a fin extending in a lengthwise direction of the vehicle 3.

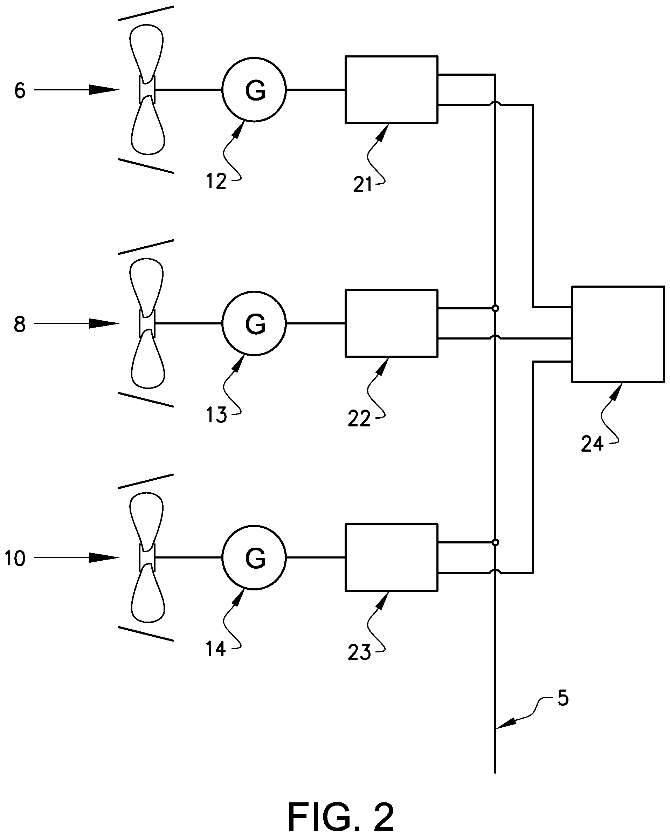

Figure 2 schematically illustrates a control system of a vehicle 3 of a submersible power plant 1 according to the invention. In figure 2 the first turbine 6, the second turbine 8 and the third turbine 10 are schematically illustrated. The first turbine 6 is connected to the first generator 12 which in turn is connected to a first torque/power controlling electronics 21. The second turbine 8 is connected to the second generator 13 which in turn is connected to a second torque/power controlling electronics 22. The third turbine 10 is connected to the third generator 14 which in turn is connected to a third torque/power controlling electronics 23. The tether 5 is further connected to each torque/power controlling electronics 21, 22, 23. Each torque/power controlling electronics 21, 22, 23 and the tether 5 is in turn connected to an on-board computer 24. The on-board computer 24 outputs control signals to the separate torque/power controlling electronics 21, 22, 23 in order to intelligently control each generator 12, 13, 14 and thereby each turbine 6, 8, 10 in order to steer the vehicle 3. Inputs to the on-board computer are for instance the orientation and location of the vehicle 3. These inputs can be measured by various sensors or calculated by orientation and location algorithms. The above description can be extended to any number of turbines and generators. Further, the on-board computer 24 can be made up by more than one computer. The torque/power controlling electronics 21, 22, 23 can for instance each comprise a separate on-board computer. The on-board computer 24 may be located on the bottom of a body of water or on land.In the following figures only the placement of turbines and nacelles are mentioned. It is to be understood that each turbine is attached to a respective nacelle, where each nacelle comprises a generator being connected to the turbine. Each nacelle is further attached to either the top surface or the bottom surface of the wing by a fastening component as described above. The tether 5 is attached to a coupling either in or near the wing 4 or to a coupling in a nacelle, such as an enclosure in said nacelle.

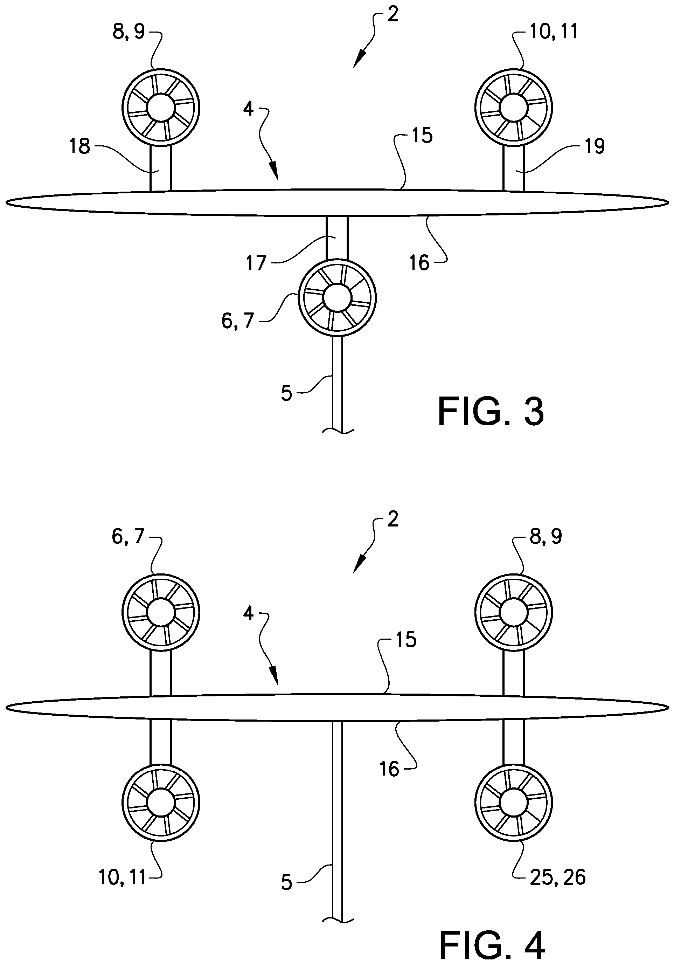

Figure 3 schematically illustrates a vehicle 3 of a submersible power plant 1 according to the invention. In figure 3 the first turbine 6 and first nacelle 7 is attached to the vehicle 3 on the bottom surface 16 of the wing 4. The second turbine 8 and second nacelle 9 and the third turbine 10 and nacelle 11 are attached to the vehicle 3 to the top surface 15 of the wing 4. In this configuration the tether 5 is attached to the vehicle 3 by being attached to a coupling in the first nacelle 7.

Figure 4 schematically illustrates a vehicle 3 of a submersible power plant 1 according to the invention. In figure 4 the vehicle 3 further comprises a fourth turbine 25 and fourth nacelle 26. The first turbine 6 and first nacelle 7 and the second turbine 8 and second nacelle 9 are attached to the vehicle 3 on the top surface 15 of the wing 4. The third turbine 10 and third nacelle 11 and the fourth turbine 25 and fourth nacelle 26 are attached to the vehicle 3 on the bottom surface 16 of the wing 4.

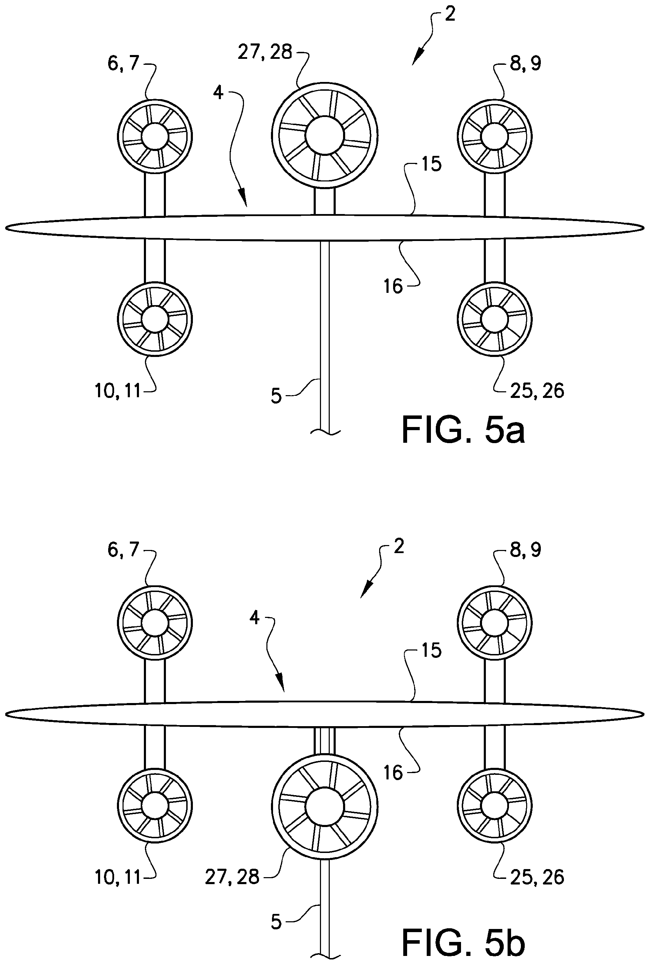

Figures 5a and 5b schematically illustrates a vehicle 3 of a submersible power plant 1 according to the invention. In figures 5a and 5b the vehicle 3 further comprises a fifth turbine 27 and fifth nacelle 28. The first turbine 6 and first nacelle 7 and the second turbine 8 and second nacelle 9 are attached to the vehicle 3 on the top surface 15 of the wing 4. The third turbine 10 and third nacelle 11 and the fourth turbine 25 and fourth nacelle 26 are attached to the vehicle 3 on the bottom surface 16 of the wing 4. The fifth turbine 27 is in figure 5a attached to the vehicle 3 on the top surface 15 of the wing 4. The fifth turbine 27 is in figure 5b attached to the vehicle 3 on the bottom surface 16 of the wing 4. In figures 5a and 5b the fifth turbine 27 is larger than the other four turbines 6, 8, 10, 25. It is also possible for all five turbines 6, 8, 10, 25, 27 to be of the same size.

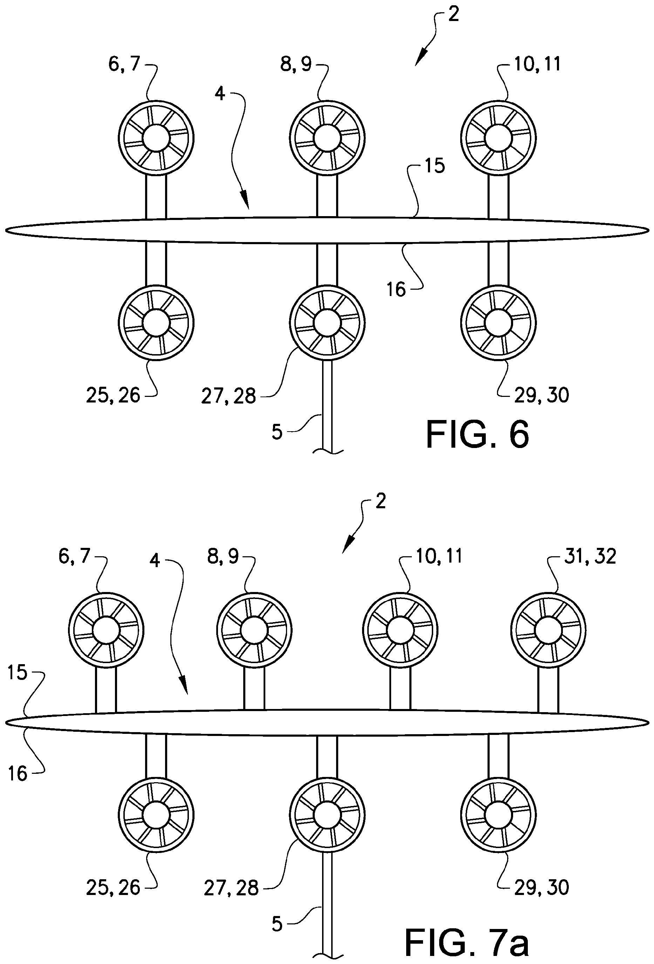

Figure 6 schematically illustrates a vehicle 3 of a submersible power plant 1 according to the invention. In figure 6 the vehicle 3 further comprises a sixth turbine 29 and sixth nacelle 30. The first turbine 6 and first nacelle 7 and the second turbine 8 and second nacelle 9 and the third turbine 10 and third nacelle 11 are attached to the vehicle 3 on the top surface 15 of the wing 4. The fourth turbine 25 and fourth nacelle 26 and the fifth turbine 27 and fifth nacelle 28 and the sixth turbine 29 and the sixth nacelle 30 are attached to the vehicle 3 on the bottom surface 16 of the wing 4.

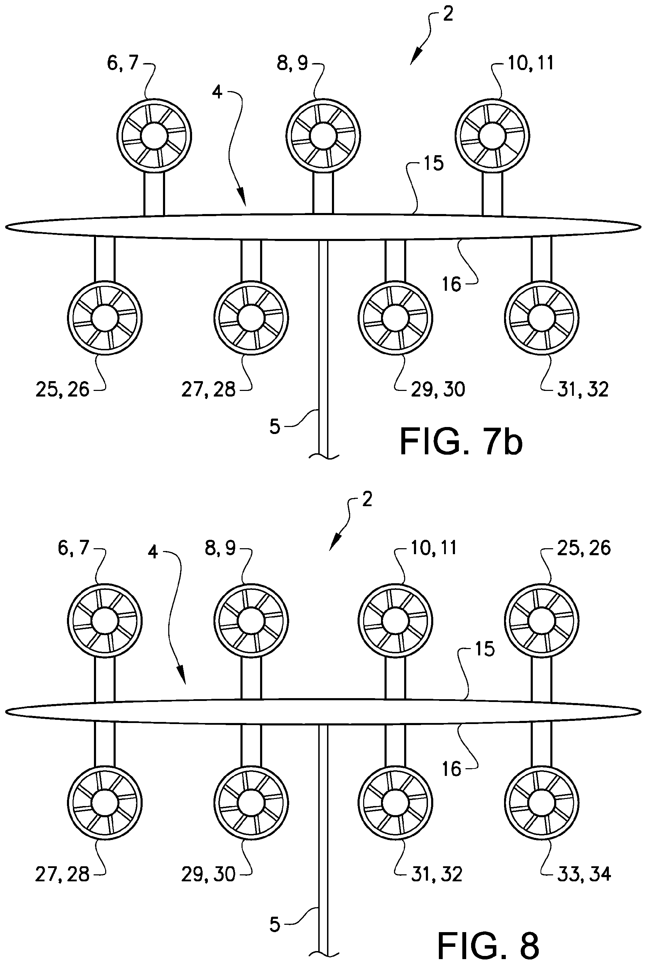

Figures 7a and 7b schematically illustrates a vehicle 3 of a submersible power plant 1 according to the invention. In figures and 7b the vehicle 3 further comprises a seventh turbine 31 and seventh nacelle 32. The first turbine 6 and first nacelle 7 and the second turbine 8 and second nacelle 9 and the third turbine 10 and third nacelle 11 are attached to the vehicle 3 on the top surface 15 of the wing 4. The fourth turbine 25 and fourth nacelle 26 and the fifth turbine 27 and fifth nacelle 28 and the sixth turbine 29 and sixth nacelle 30 are attached to the vehicle 3 on the bottom surface 16 of the wing 4. The seventh turbine 31 is in figure 7a attached to the vehicle 3 on the top surface 15 of the wing 4. The seventh turbine 31 is in figure 7b attached to the vehicle 3 on the bottom surface 16 of the wing 4. Similar to the configuration shown in figures 5a and 5b, one of the turbines may have a larger diameter than the remaining. Preferably the centre turbine, i.e. fifth turbine 27 in figure 7a and second turbine 8 in figure 7b has a larger diameter than the remaining turbines. It is possible to have more than one turbine having a larger diameter than the remaining turbines. It is also possible to have turbines with more than two different diameters.

Figure 8 schematically illustrates a vehicle 3 of a submersible power plant 1 according to the invention. In figure 8 the vehicle 3 further comprises an eighth turbine 33 and eighth nacelle 34. The first turbine 6 and first nacelle 7, the second turbine 8 and second nacelle 9, the third turbine 10 and third nacelle 11 and the fourth turbine 25 and fourth nacelle 26 are attached to the vehicle 3 on the top surface 15 of the wing 4. The fifth turbine 27 and fifth nacelle 28, the sixth turbine 29 and sixth nacelle 30, the seventh turbine 31 and the seventh nacelle 32 and the eighth turbine 33 and the eighth nacelle 34 are attached to the vehicle 3 on the bottom surface 16 of the wing 4.

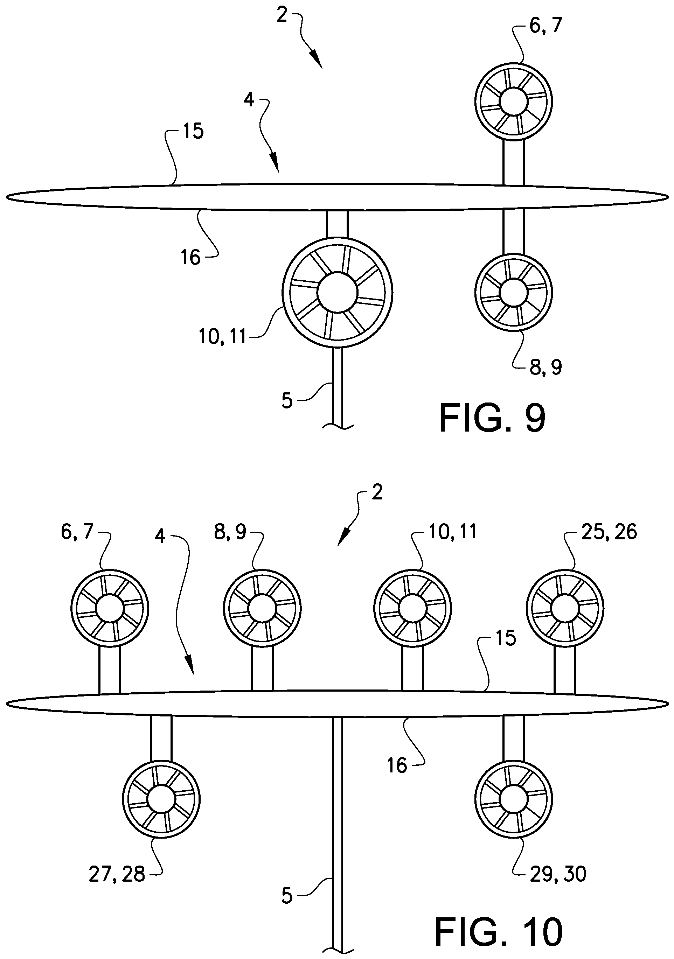

Figure 9 schematically illustrates a vehicle 3 of a submersible power plant 1 according to the invention. In figure 9 the vehicle 3 comprises a first turbine 6 and a first nacelle 7 attached to the vehicle 3 on a top surface 15 of the wing 4. The second turbine 8 and second nacelle 9 and the third turbine 10 and third nacelle 11 are attached to the vehicle 3 to a bottom surface 16 of the wing 4. Both the first turbine 6 and the second turbine 8 are placed on one side of the centre of mass of the wing 4 in a transverse direction. The third turbine 10 and third nacelle 11 are preferably placed in the centre of the wing 4, just below the centre of mass of the wing 4. The third turbine 10 is in this case larger than the first turbine 6 and second turbine 8. This configuration is advantageous if the vehicle 3 of the submersible power plant 1 is intended to move in a circular or oval trajectory. The third turbine 10 can alternatively be placed on the top surface 15 of the wing 4 in the centre of the wing 4, just above the centre of mass of the wing 4.

Figure 10 schematically illustrates a vehicle 3 of a submersible power plant 1 according to the invention. In figure 6 the vehicle 3 comprises six turbines 6, 8, 10, 25, 27, 29 and six nacelles 7, 9, 11, 26, 28, 30. The first turbine 6 and first nacelle 7, the second turbine 8 and second nacelle 9, the third turbine 10 and third nacelle 11 and fourth turbine 25 and fourth nacelle 26 are attached to the vehicle 3 on the top surface 15 of the wing 4.The fifth turbine 27 and fifth nacelle 28 and the sixth turbine 29 and the sixth nacelle 30 are attached to the vehicle 3 on the bottom surface 16 of the wing 4. The opposite configuration with four turbines attached to the bottom surface and two turbines attached to the top surface is also possible.

Reference signs mentioned in the claims should not be seen as limiting the extent of the matter protected by the claims, and their sole function is to make the claims easier to understand.

As will be realised, the invention is capable of modification in various obvious respects, all without departing from the scope of the appended claims. Accordingly, the drawings and the description thereto are to be regarded as illustrative in nature, and not restrictive. The above configurations described may be extended to any number of turbines. It is also possible to have vehicles having two or more additional turbines on either surface of the wing than on the opposite side of the wing, for instance a vehicle having four turbines on the upper side of the vehicle and two turbines on the lower side of the wing.

The distance between the turbines may be varied in order to optimize both energy output and manoeuvrability. It is not necessary to have the same distance between all turbines on one side of the wing. It is further not necessary to have the same distance between the turbines on both sides of the wing when there are an equal number of turbines on both sides of the wing.

## Claims

1. Submersible power plant (1) for generating electrical power, the submersible power plant (1) comprising a structure (2) and a vehicle (3) comprising at least one wing (4), the vehicle (3) being arranged to be secured to the structure (2) by means of at least one tether (5); the vehicle (3) being arranged to move in a predetermined trajectory by means of a fluid stream passing the wing (4), the submersible power plant (1) comprises at least a first turbine (6), a second turbine (8) and a third turbine (10) being arranged to be attached to the wing (4) of the vehicle (3), the first turbine (6) is connected to a first generator (12), the second turbine (8) is connected to a second generator (13), the third turbine (10) is connected to a third generator (14), **characterized in that** at least one of the first turbine (6), the second turbine (8) and the third turbine (10) is attached to the vehicle (3) on a top surface (15) of the wing (4), and at least one of the first turbine (6), the second turbine (8) and the third turbine (10) is attached to a bottom surface (16) of the wing (4), where said first generator (12), second generator (13) and third generator (14) are arranged to be able to produce different fluid dynamics pressures exerted on the respective first, second and third turbines (6, 8, 10) by means of torque control, and **in that** the at least first, second and third turbines (6, 8, 10) have a turbine function for generating electrical power and a thruster function for propelling the vehicle (3) forwards or backwards, the thruster function being produced by that at least one of the first, second and third generators (12, 13, 14) are run in forward or in reverse.

2. Submersible power plant (1) according to claim 1, wherein the submersible power plant (1) comprises an odd number of turbines greater than three, where one more turbine is attached to the vehicle (3) to a top surface (15) of the wing (4) than is attached to the vehicle (3) on a bottom surface (16) of the vehicle (3).

3. Submersible power plant (1) according to claim 1, wherein the submersible power plant (1) comprises an odd number of turbines greater than three, where one less turbine is attached to the vehicle (3) to a top surface (15) of the wing (4) than is attached to the vehicle (3) on a bottom surface (16) of the vehicle (3).

4. Submersible power plant (1) according to claim 2 or 3, wherein the submersible power plant (1) comprises at least one turbine which has a larger rotor diameter than the remaining turbines.

5. Submersible power plant (1) according to claim 1, wherein the submersible power plant (1) comprises an even number of turbines greater than two, where an equal number of turbines are attached to the vehicle (3) to a top surface (15) of the wing (4) and to the vehicle (3) on a bottom surface (16) of the wing (4).

6. Submersible power plant (1) according to claim 1, wherein the submersible power plant (1) comprises an even number of turbines greater than two, where more turbines are attached to the vehicle (3) to a top surface (15) of the wing (4) than to the vehicle (3) on a bottom surface (16) of the wing (4) or where more turbines are attached to the vehicle (3) to a bottom surface (16) of the wing (4) than to the vehicle (3) on a top surface (15) of the vehicle (3).

7. Submersible power plant (1) according to any one of the preceding claims, wherein, when one turbine is not attached to the bottom surface (16) of the wing (4) at the centre of mass of the wing (4); the tether (5) is attached to the vehicle (3) by being attached to a coupling in the wing (4) of the vehicle (3).

8. Submersible power plant (1) according to any one of the preceding claims, wherein, when one turbine is attached to the bottom surface (16) of the wing (4) at the centre of mass of the wing (4), the tether (5) is attached to the vehicle (3) by being attached to a coupling in an enclosure of a nacelle to which said turbine is attached.

9. Submersible power plant (1) according to any one of the preceding claims, wherein the submersible power plant (1) comprises at least one passive control surface (20).

10. Method for steering a submersible power plant (1), the submersible power plant (1) comprising a structure (2) and a vehicle (3) comprising at least one wing (4), the vehicle (3) being arranged to be secured to the structure (2) by means of at least one tether (5); the vehicle (3) being arranged to move in a predetermined trajectory by means of a fluid stream passing the wing (4), **characterized in that** the submersible power plant (1) comprises at least a first turbine (6), a second turbine (8) and a third turbine (10) being arranged to be attached to the wing (4) of the vehicle (3), where at least one of the first, second and third turbine (6, 8, 10) is attached to the vehicle (3) on a top surface (15) of the wing (4), where the first turbine (6) is connected to a first generator (12), the second turbine (8) is connected to a second generator (13), the third turbine (10) is connected to a third generator (14), where said first generator (12), second generator (13) and third generator (14) are arranged to be able to produce different counter-torques to the respective first, second and third turbines (12, 13, 14), whereupon the first turbine (6), the second turbine (8) and the third turbine (10) each rotates at different rotation speeds,
wherein the method comprises
- applying a first counter-torque by the first generator (12) to the first turbine (6) to set a first rotation speed of the first turbine (6)
- applying a second counter-torque by the second generator (13) to the second turbine (8) to set a second rotation speed of the second turbine (8).
- applying a third counter-torque by the third generator (14) to the third turbine (10) to set a third rotation speed of the third turbine (10),
where the at least first, second and third turbines (6, 8, 10) have a turbine function for generating electrical power and a thruster function for propelling the vehicle (3) forwards or backwards, the thruster function being produced by that at least one of the first, second and third generators (12, 13, 14) are run in forward or in reverse.

11. Method according to claim 10, wherein the method comprises:
- controlling the pitch of the vehicle (3) by applying a counter-torque to the one or more turbines connected to the vehicle (3) on a top surface (15) of the wing (4) by their corresponding generators, the total of which is different from the total counter-torque applied to the one or more turbines connected to the vehicle (3) on a bottom surface (16) of the wing (4) by their corresponding generators.

12. Method according to claim 10 or 11, wherein the method comprises:
- controlling the yaw of the vehicle (3) by applying a counter-torque to the one or more turbines connected to the vehicle (3) on a first side of the centre of mass of the wing (4) by their corresponding generators, the total of which is different from the total counter-torque applied to the one or more turbines connected to the vehicle (3) on a second side of the centre of mass of the wing (4) by their corresponding generators.

## Patentansprüche

1. Unterwasserkraftwerk (1) zum Erzeugen von elektrischer Energie, wobei das Unterwasserkraftwerk (1) eine Struktur (2) und ein Fahrzeug (3) mit mindestens einem Flügel (4) umfasst, wobei das Fahrzeug (3) angeordnet ist, mittels mindestens einer Halteleine (5) an der Struktur (2) befestigt zu sein; wobei das Fahrzeug (3) angeordnet ist, sich mittels eines den Flügel (4) passierenden Fluidstroms in einer vorbestimmten Bahn zu bewegen, wobei das Unterwasserkraftwerk (1) mindestens eine erste Turbine (6), eine zweite Turbine (8) und eine dritte Turbine (10) umfasst, die angeordnet sind, um am Flügel (4) des Fahrzeugs (3) befestigt zu sein, wobei die erste Turbine (6) mit einem ersten Generator (12) verbunden ist, die zweite Turbine (8) mit einem zweiten Generator (13) verbunden ist, die dritte Turbine (10) mit einem dritten Generator (14) verbunden ist, **dadurch gekennzeichnet, dass** mindestens eine von der ersten Turbine (6), der zweiten Turbine (8) und der dritten Turbine (10) an einer Oberseite (15) des Flügels (4) an dem Fahrzeug (3) befestigt ist, und mindestens eine von der ersten Turbine (6), der zweiten Turbine (8) und der dritten Turbine (10) an einer Unterseite (16) des Flügels (4) befestigt ist, wobei der erste Generator (12), zweite Generator (13) und dritte Generator (14) angeordnet sind, in der Lage zu sein, mittels Drehmomentsteuerung unterschiedliche Fluiddynamikdrücke zu produzieren, die auf die jeweilige erste, zweite und dritte Turbine (6, 8, 10) ausgeübt werden, und dadurch, dass die mindestens erste, zweite und dritte Turbine (6, 8, 10) eine Turbinenfunktion zum Erzeugen elektrischer Energie und eine Schubfunktion aufweisen, um das Fahrzeug (3) nach vorne oder nach hinten anzutreiben, wobei die Schubfunktion, die durch den mindestens einen von dem ersten, zweiten und dritten Generator (12, 13, 14) produziert wird, in Vorwärts- oder Rückwärtsrichtung verläuft.

2. Unterwasserkraftwerk (1) nach Anspruch 1, wobei das Unterwasserkraftwerk (1) eine ungerade Anzahl von Turbinen größer als drei umfasst, wobei eine Turbine mehr am Fahrzeug (3) an einer Oberseite (15) des Flügels (4) befestigt ist als am Fahrzeug (3) an einer Unterseite (16) des Fahrzeugs (3) befestigt ist.

3. Unterwasserkraftwerk (1) nach Anspruch 1, wobei das Unterwasserkraftwerk (1) eine ungerade Anzahl von Turbinen größer als drei umfasst, wobei eine Turbine weniger am Fahrzeug (3) an einer Oberseite (15) des Flügels (4) befestigt ist als am Fahrzeug (3) an einer Unterseite (16) des Fahrzeugs (3) befestigt ist.

4. Unterwasserkraftwerk (1) nach Anspruch 2 oder 3, wobei das Unterwasserkraftwerk (1) mindestens eine Turbine umfasst, die einen größeren Rotordurchmesser als die übrigen Turbinen aufweist.

5. Unterwasserkraftwerk (1) nach Anspruch 1, wobei das Unterwasserkraftwerk (1) eine gerade Anzahl von Turbinen größer als zwei umfasst, wobei eine gleiche Anzahl von Turbinen am Fahrzeug (3) an einer Oberseite (15) des Flügels (4) und am Fahrzeug (3) an einer Unterseite (16) des Flügels (4) befestigt ist.

6. Unterwasserkraftwerk (1) nach Anspruch 1, wobei das Unterwasserkraftwerk (1) eine gerade Anzahl von Turbinen größer als zwei umfasst, wobei mehr Turbinen am Fahrzeug (3) an einer Oberseite (15) des Flügels (4) als am Fahrzeug (3) an einer Unterseite (16) des Flügels (4) befestigt sind oder wobei mehr Turbinen am Fahrzeug (3) an einer Unterseite (16) des Flügels (4) als am Fahrzeug (3) an einer Oberseite (15) des Fahrzeugs (3) befestigt sind.

7. Unterwasserkraftwerk (1) nach einem der vorstehenden Ansprüche, wobei, wenn eine Turbine nicht am Massenzentrum des Flügels (4) an der Unterseite (16) des Flügels (4) befestigt ist, die Halteleine (5) durch Befestigen an einer Kupplung im Flügel (4) des Fahrzeugs (3) am Fahrzeug (3) befestigt ist.

8. Unterwasserkraftwerk (1) nach einem der vorstehenden Ansprüche, wobei, wenn eine Turbine am Massenzentrum des Flügels (4) an der Unterseite (16) des Flügels (4) befestigt ist, die Halteleine (5) durch Befestigen an einer Kupplung in einem Gehäuse einer Gondel, an der die Turbine befestigt ist, am Fahrzeug (3) befestigt ist.

9. Unterwasserkraftwerk (1) nach einem der vorstehenden Ansprüche, wobei das Unterwasserkraftwerk (1) mindestens eine passive Steueroberfläche (20) umfasst.

10. Verfahren zum Steuern eines Unterwasserkraftwerks (1), wobei das Unterwasserkraftwerk (1) eine Struktur (2) und ein Fahrzeug (3) mit mindestens einem Flügel (4) umfasst, wobei das Fahrzeug (3) angeordnet ist, um mittels mindestens einer Halteleine (5) an der Struktur (2) befestigt zu sein; wobei das Fahrzeug (3) angeordnet ist, sich mittels eines Fluidstroms, der den Flügel (4) passiert, in einer vorbestimmten Bahn zu bewegen, **dadurch gekennzeichnet, dass** das Unterwasserkraftwerk (1) mindestens eine erste Turbine (6), eine zweite Turbine (8) und eine dritte Turbine (10) umfasst, die angeordnet sind, um am Flügel (4) des Fahrzeugs (3) befestigt zu sein, wobei mindestens eine von der ersten, zweiten und dritten Turbine (6, 8, 10) am Fahrzeug (3) an einer Oberseite (15) des Flügels (4) befestigt ist, wobei die erste Turbine (6) mit einem ersten Generator (12) verbunden ist, die zweite Turbine (8) mit einem zweiten Generator (13) verbunden ist, die dritte Turbine (10) mit einem dritten Generator (14) verbunden ist, wobei der erste Generator (12), zweite Generator (13) und dritte Generator (14) angeordnet sind, um in der Lage zu sein, unterschiedliche Gegendrehmomente zu der jeweiligen ersten, zweiten und dritten Turbine (12, 13, 14) zu produzieren, woraufhin die erste Turbine (6), die zweite Turbine (8) und die dritte Turbine (10) sich jeweils bei unterschiedlichen Drehzahlen drehen,
wobei das Verfahren Folgendes umfasst
- Anlegen eines ersten Gegendrehmoments durch den ersten Generator (12) an die erste Turbine (6), um eine erste Drehzahl der ersten Turbine (6) einzustellen,
- Anlegen eines zweiten Gegendrehmoments durch den zweiten Generator (13) an die zweite Turbine (8), um eine zweite Drehzahl der zweiten Turbine (8) einzustellen,
- Anlegen eines dritten Gegendrehmoments durch den dritten Generator (14) an die dritte Turbine (10), um eine dritte Drehzahl der dritten Turbine (10) einzustellen,
wobei die mindestens erste, zweite und dritte Turbine (6, 8, 10) eine Turbinenfunktion zum Erzeugen elektrischer Energie und einer Schubfunktion zum Antreiben des Fahrzeugs (3) nach vorne oder nach hinten aufweisen, wobei die Schubfunktion, die durch den mindestens einen des ersten, zweiten und dritten Generators (12, 13, 14) produziert wird, in Vorwärts- oder Rückwärtsrichtung verläuft.

11. Verfahren nach Anspruch 10, wobei das Verfahren umfasst:
- Steuern der Steigung des Fahrzeugs (3) durch Anlegen eines Gegendrehmoments an die eine oder die mehreren an einer Oberseite (15) des Flügels (4) mit dem Fahrzeug (3) verbundenen Turbinen durch ihre entsprechenden Generatoren, dessen Summe von der Summe des Gegendrehmoments, das an die eine oder die mehreren Turbinen, die an einer Unterseite (16) des Flügels (4) mit dem Fahrzeug (3) verbunden sind, durch ihre entsprechenden Generatoren angelegt wird, verschieden ist.

12. Verfahren nach Anspruch 10 oder 11, wobei das Verfahren umfasst:
- Steuern der Gierbewegung des Fahrzeugs (3) durch Anlegen eines Gegendrehmoments an die eine oder die mehreren auf einer ersten Seite des Massenzentrums des Flügels (4) mit dem Fahrzeug (3) verbundenen Turbinen durch ihre entsprechenden Generatoren, dessen Summe von der Summe des Gegendrehmoments, das an die eine oder die mehreren Turbinen, die auf einer zweiten Seite des Massenzentrums des Flügels (4) mit dem Fahrzeug (3) verbunden sind, durch ihre entsprechenden Generatoren angelegt wird, verschieden ist.

## Revendications

1. Centrale électrique submersible (1) pour la génération d'énergie électrique, la centrale électrique submersible (1) comprenant une structure (2) et un véhicule (3) comprenant au moins une aile (4), le véhicule (3) étant agencé pour être fixé à la structure (2) au moyen d'au moins une attache (5) ; le véhicule (3) étant agencé pour se déplacer dans une trajectoire prédéterminée au moyen d'un flux de fluide traversant l'aile (4), la centrale électrique submersible (1) comprenant au moins une première turbine (6), une deuxième turbine (8) et une troisième turbine (10) étant agencée pour être fixées à l'aile (4) du véhicule (3), la première turbine (6) étant reliée à un premier générateur (12), la deuxième turbine (8) étant reliée à un deuxième générateur (13), la troisième turbine (10) étant reliée à un troisième générateur (14), **caractérisée en ce qu'**au moins l'une de la première turbine (6), de la deuxième turbine (8) et de la troisième turbine (10) est fixée au véhicule (3) sur une surface supérieure (15) de l'aile (4), et au moins l'une de la première turbine (6), de la deuxième turbine (8) et de la troisième turbine (10) est fixée à un surface inférieure (16) de l'aile (4), où lesdits premier générateur (12), deuxième générateur (13) et troisième générateur (14) sont agencés pour être aptes à produire différentes pressions dynamiques de fluide exercées sur respectivement la première, deuxième et troisième turbines (6, 8, 10) au moyen d'une commande de couple, et **en ce que** les au moins première, deuxième et troisième turbines (6, 8, 10) ont une fonction de turbine pour générer de l'énergie électrique et une fonction propulseur pour propulser le véhicule (3) vers l'avant ou vers l'arrière, la fonction de propulseur étant produite par le fait que l'au moins un des premier, deuxième et troisième générateurs (12, 13, 14) est en marche avant ou en marche arrière.

2. Centrale électrique submersible (1) selon la revendication 1, dans laquelle la centrale électrique submersible (1) comprend un nombre impair de turbines supérieur à trois, où plus d'une turbine est attachée sur le véhicule (3) sur une surface supérieure (15) de l'aile (4) que sur le véhicule (3) sur une surface inférieure (16) du véhicule (3).

3. Centrale électrique submersible (1) selon la revendication 1, dans laquelle la centrale électrique submersible (1) comprend un nombre impair de turbines supérieur à trois, où moins d'une turbine est attachée sur le véhicule (3) sur une surface supérieure (15) de l'aile (4) que sur le véhicule (3) sur une surface inférieure (16) du véhicule (3).

4. Centrale électrique submersible (1) selon les revendications 2 ou 3, dans laquelle la centrale électrique submersible (1) comprend au moins une turbine qui a un diamètre de rotor supérieur à celui des turbines restantes.

5. Centrale électrique submersible (1) selon la revendication 1, dans laquelle la centrale électrique submersible (1) comprend un nombre pair de turbines supérieur à deux, où un nombre égal de turbines est attaché au véhicule (3) à une surface supérieure (15) de l'aile (4) et au véhicule (3) sur une surface inférieure (16) de l'aile (4).

6. Centrale électrique submersible (1) selon la revendication 1, dans laquelle la centrale électrique submersible (1) comprend un nombre pair de turbines supérieur à deux, où plus de turbines sont attachées au véhicule (3) à une surface supérieure (15) de l'aile (4) que sur le véhicule (3) sur une surface inférieure (16) de l'aile (4) ou où plus de turbines sont attachées au véhicule (3) sur une surface inférieure (16) de l'aile (4) que sur le véhicule (3) sur une surface supérieure (15) du véhicule (3).

7. Centrale électrique submersible (1) selon l'une quelconque des revendications précédentes, dans laquelle, lorsqu'une turbine n'est pas fixée à la surface inférieure (16) de l'aile (4) au centre de masse de l'aile (4) ; l'attache (5) est fixée au véhicule (3) en étant fixé à un accouplement dans l'aile (4) du véhicule (3).

8. Centrale électrique submersible (1) selon l'une quelconque des revendications précédentes, dans laquelle, lorsqu'une turbine est fixée à la surface inférieure (16) de l'aile (4) au centre de masse de l'aile (4), l'attache (5) est fixée au véhicule (3) en étant fixée à un accouplement dans une enceinte d'une nacelle à laquelle est fixée ladite turbine.

9. Centrale électrique submersible (1) selon l'une quelconque des revendications précédentes, dans laquelle la centrale électrique submersible (1) comprend au moins une surface de contrôle passive (20).

10. Procédé pour diriger une centrale électrique submersible (1), la centrale électrique submersible (1) comprenant une structure (2) et un véhicule (3) comprenant au moins une aile (4), le véhicule (3) étant agencé pour être fixé à la structure (2) au moyen d'au moins une attache (5) ; le véhicule (3) étant agencé pour se déplacer dans une trajectoire prédéterminée au moyen d'un flux de fluide traversant l'aile (4), **caractérisé en ce que** la centrale électrique submersible (1) comprenant au moins une première turbine (6), une deuxième turbine (8) et une troisième turbine (10) étant agencée pour être fixées à l'aile (4) du véhicule (3), au moins une des première, deuxième et troisième turbines (6, 8, 10) étant fixée au véhicule (3) sur une surface supérieure (15) de l'aile (4), la première turbine (6) étant reliée à un premier générateur (12), la deuxième turbine (8) étant reliée à un deuxième générateur (13), la troisième turbine (10) étant reliée à un troisième générateur (14), lesdits premier générateur (12), deuxième générateur (13) et troisième générateur (14) étant agencés pour être aptes à produire des contre-couples différents respectivement aux première, deuxième et troisième turbines (12, 13, 14), ensuite la première turbine (6), la deuxième turbine (8) et la troisième turbine (10) tournent chacune à des vitesses de rotation différentes,
le procédé comprenant
- appliquer un premier contre-couple par le premier générateur (12) à la première turbine (6) pour régler une première vitesse de rotation de la première turbine (6)
- appliquer un deuxième contre-couple par le deuxième générateur (13) à la deuxième turbine (8) pour régler une deuxième vitesse de rotation de la deuxième turbine (8)
- appliquer un troisième contre-couple par le troisième générateur (14) à la troisième turbine (10) pour régler une troisième vitesse de rotation de la troisième turbine (10)
dans lequel les au moins première, deuxième et troisième turbines (6, 8, 10) ont une fonction de turbine pour générer de l'énergie électrique et une fonction propulseur pour propulser le véhicule (3) vers l'avant ou vers l'arrière, la fonction de propulseur étant produite par le fait que l'au moins un des premier, deuxième et troisième générateurs (12, 13, 14) est en marche avant ou en marche arrière.

11. Procédé selon la revendication 10, dans lequel le procédé comprend l'étape consistant à :
- commander le pas du véhicule (3) en appliquant un contre-couple à l'une ou plusieurs turbines reliées au véhicule (3) sur une surface supérieure (15) de l'aile (4) par leurs générateurs correspondants, dont le total est différent du contre-couple total appliqué aux une ou plusieurs turbines reliées au véhicule (3) sur une surface inférieure (16) de l'aile (4) par leur correspondant générateurs.

12. Procédé selon la revendication 10 ou 11, dans lequel le procédé comprend l'étape consistant à :
- commander le lacet du véhicule (3) en appliquant un contre-couple à l'une ou plusieurs turbines reliées au véhicule (3) sur un premier côté du centre de masse de l'aile (4) par leurs générateurs correspondants, dont le total est différent du contre-couple total appliqué à l'une ou plusieurs turbines reliées au véhicule (3) d'un deuxième côté du centre de masse de l'aile (4) par leur correspondant générateurs.
